# EUROPEAN PATENT APPLICATION

(11) **EP 4 603 755 A1**
(43) Date of publication of application: **20.08.2025**
(21) Application number: 23882880.0
(22) Date of filing: 04.09.2023
(51) Int. Cl.: F24C 7/08, A47J 36/32, A47J 37/06, H04N 23/57, G06Q 50/10, G06V 20/68, G06N 3/08

(54) **COOKING APPLIANCE AND METHOD FOR OPERATING SAME**

(30) Priority: 27.10.2022 KR 20220140148
(71) Applicant: LG Electronics Inc., Yeongdeungpo-gu Seoul 07336 (KR)
(72) Inventor: LEE, Joongkeun, Seoul 08592 (KR); PARK, Hyunsung, Seoul 08592 (KR); KIM, Jungjun, Seoul 08592 (KR); JUNG, Sanghun, Seoul 08592 (KR); RO, Kyungtae, Seoul 08592 (KR); SONG, Jihyun, Seoul 08592 (KR); HA, Jeongyo, Seoul 08592 (KR)
(74) Representative: Vossius & Partner Patentanwälte Rechtsanwälte mbB
(86) International application number: PCT/KR2023/013144
(87) International publication number: WO 2024/090773

(57) **Abstract**

A cooking appliance according to an embodiment of the present disclosure can: recognize food from an image captured by a camera; obtain cooking setting information for cooking the recognized food; obtain cooking status information for the food while cooking the food according to the obtained cooking setting information; and transmit the obtained cooking status information to a terminal.

## Description

### Technical field

This disclosure relates to a cooking appliance that obtains the cooking status of food in real-time through image recognition and provides notifications to a user.

### Background

Cooking appliances that use heat, such as ovens, are essential home appliances in daily life.

The cooking appliance can be used to cook standard and non-standard foods.

In particular, automatic cooking settings for non-standard foods such as home meal replacement (HMR) and meal kits are determined by temperature, time, and cooking mode.

However, even if the same food is made according to the recipe guide, the food made by the user is bound to be different because the performance of the cooking appliance is different for each model. In other words, because the cooking setting value cannot always be applied the same, a situation occurs in which the food may be undercooked or burned.

Ultimately, the inconvenience arises as the user has to monitor the cooking status.

US10845060 recognizes the food in the oven based on camera images, and when the user checks the recognized results and selects the food, the cooking setting is automatically set to cook, and the user can use the oven's display screen or a configuration for checking the cooking status on a remotely connected smart terminal is initiated.

However, if it is a standard dish, you can expect the performance of the automatic cooking setting service, but the US10845060 does not distinguish between the types of food, so there is a problem that the cooking condition is not perfect for non-standard food.

### Detailed description

### Technical problem

The purpose of the present disclosure is to provide a cooking appliance that can recognize changes in the state of food inside the cooking appliance in real time.

The purpose of the present disclosure is to provide a cooking appliance that can periodically notify the user of changes in the state of food being cooked inside the cooking appliance.

The purpose of the present disclosure is to be able to cook food according to the optimal cooking technique, regardless of whether it is a standard food or a non-standard food, through real-time image processing.

The purpose of this disclosure is to provide a video that can show a condensed cooking process that lasts for a long time.

### Technical solution

A cooking appliance according to an embodiment may include a memory; a wireless communication unit wirelessly communicating with a terminal; a cooking chamber; a heater configured to heat an inside of the cooking chamber; a camera configured to capture the cooking chamber; and a processor configured to recognize food from an image captured by the camera, obtain cooking setting information for cooking the recognized food, start cooking the food through the heater according to the obtained cooking setting information, obtain cooking status information for the food, and transmit the obtained cooking status information to the terminal through the wireless communication unit.

The cooking appliance according to an embodiment may be configured to transmit the cooking status information to the terminal whenever the cooking status of the food is changed.

The cooking appliance according to an embodiment may be configured to transmit the identification information to a server and receive the cooking setting information including recipe information of the food from the server.

The cooking appliance according to an embodiment can be configured to generate the time-lapse video from images captured by the camera based on the time-lapse setting information for generating a time-lapse video showing a cooking process.

### Effect of the invention

According to an embodiment of the present disclosure, information on the cooking status can be provided to the user in real time according to changes in the cooking status. Accordingly, the user does not need to directly check the cooking status in front of the cooking appliance, and the convenience of cooking can be greatly improved.

According to an embodiment of the present disclosure, cooking status information can be notified to the user in real time, and food can be prevented from overheating or being overcooked as a result of a malfunction according to the automatic cooking setting.

According to an embodiment of the present disclosure, regardless of whether the food is standard or non-standard, the food can be cooked using the optimal cooking technique.

According to an embodiment of the present disclosure, users can quickly view the cooking process through a time-lapse video illustrating the cooking process and receive support for SNS activities.

### Brief description of the drawings

FIG. 1 is a block diagram illustrating a cooking appliance according to an embodiment of the present disclosure.
FIG. 2 is a perspective view of a cooking appliance according to an embodiment of the present disclosure.
FIG. 3 is a perspective view illustrating the door in the cooking appliance of FIG. 2 in an open state.
FIG. 4 is a flowchart explaining a method of operating a cooking appliance according to an embodiment of the present disclosure.
FIGS 5 and 6 are diagrams explaining the learning process of an object detection model according to an embodiment of the present disclosure.
FIG. 7 illustrates the learning process of an object identification model according to an embodiment of the present disclosure.
FIG. 8 is a diagram explaining the process of obtaining cooking setting information according to an embodiment of the present invention.
FIG. 9 is a diagram illustrating an example of providing cooking state information according to a change in cooking state according to an embodiment of the present invention.
FIG. 10 is a diagram explaining a configuration for image processing of a cooking appliance according to an embodiment of the present invention.
FIG. 11 is a diagram illustrating the UI of a cooking status notification service according to an embodiment of the present invention.
FIG. 12 is a flowchart for explaining a method of operating a cooking appliance according to another embodiment of the present invention.
FIG. 13 is a diagram explaining a time-lapse UI displayed on a terminal according to an embodiment of the present invention.
FIG. 14 is a flowchart explaining the process of generating a time-lapse video according to an embodiment of the present invention.
FIGS 15a to 15c are diagrams illustrating some images during playback of a time-lapse video generated according to an embodiment of the present invention.

### Best mode

Hereinafter, embodiments disclosed in the present specification will be described in detail with reference to the attached drawings, but identical or similar components will be assigned the same reference numbers regardless of the reference numerals, and duplicate descriptions thereof will be omitted. The suffixes 'module' and 'part' for components used in the following description are given or used interchangeably only considering the ease of writing the specification, and do not have distinct meanings or roles in themselves. Additionally, in describing the embodiments disclosed in this specification, if it is determined that detailed descriptions of related known technologies may obscure the gist of the embodiments disclosed in this specification, the detailed descriptions will be omitted. In addition, the attached drawings are only for easy understanding of the embodiments disclosed in this specification, and the technical idea disclosed in this specification is not limited by the attached drawings, and all changes included in the spirit and technical scope of the present disclosure are not limited.

Terms containing ordinal numbers, such as first, second, etc., may be used to describe various components, but the components are not limited by the terms. The above terms are used only for the purpose of distinguishing one component from another.

When a component is said to be 'connected' or 'connected' to another component, it may be directly connected to or connected to that other component, but other components may exist in between. It must be understood that it may be possible. On the other hand, when a component is mentioned as being 'directly connected' or 'directly connected' to another component, it should be understood that there are no other components in between.

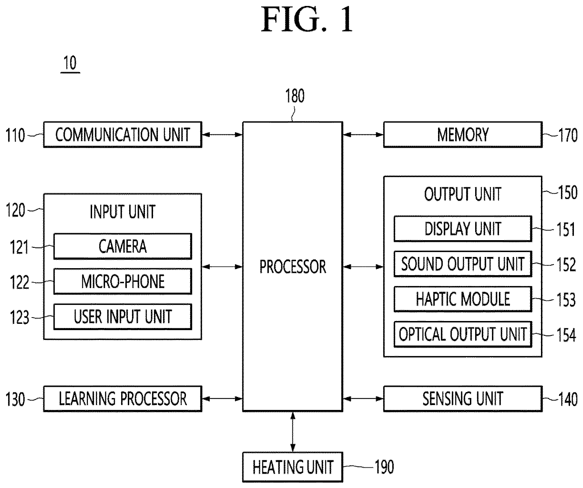

FIG. 1 is a block diagram illustrating a cooking appliance according to an embodiment of the present disclosure.

Referring to FIG. 1, the cooking appliance 100 can include a communication unit 110, an input unit 120, a learning processor 130, a sensing unit 140, an output unit 150, a memory 170, and a processor 180 and a heater 190.

The communication unit 110 can transmit and receive data with external devices such as other artificial intelligence (AI) devices or AI servers using wired and wireless communication technology. For example, the communication unit 110 may transmit and receive sensor information, user input, learning models, and control signals with external devices.

At this time, the communication technologies used by the communication unit 110 include Global System for Mobile communication (GSM), Code Division Multi Access (CDMA), Long Term Evolution (LTE), 5G, Wireless LAN (WLAN), and Wireless-Fidelity (Wi-Fi), Bluetooth^{™}, Radio Frequency Identification (RFID), Infrared Data Association (IrDA), ZigBee, Near Field Communication (NFC), etc.

The communication unit 110 may also be referred to as a communication modem or a communication circuit.

The input unit 120 can obtain various types of data.

At this time, the input unit 120 may include a camera for inputting video signals, a microphone for receiving audio signals, and a user input unit for receiving information from the user. Here, the camera or microphone may be treated as a sensor, and the signal obtained from the camera or microphone may be referred to as sensing data or sensor information.

The input unit 120 may obtain training data for model learning and input data to be used when obtaining an output using the learning model. The input unit 120 may obtain unprocessed input data, and in this case, the processor 180 or the learning processor 130 may extract input features by preprocessing the input data.

The input unit 120 includes a camera 121 for inputting video signals, a microphone 122 for receiving audio signals, and a user input unit 123 for receiving information from the user. It can be included.

Voice data or image data collected from the input unit 120 may be analyzed and processed as a user's control command.

The input unit 120 is for inputting video information (or signal), audio information (or signal), data, or information input from the user. For input of video information, the cooking appliance 100 is equipped with one or a plurality of cameras 121.

The camera 121 processes image frames such as still images or videos obtained by an image sensor in video call mode or shooting mode. The processed image frame may be displayed on the display unit 151 or stored in the memory 170.

The microphone 122 processes external acoustic signals into electrical voice data. The processed voice data can be utilized in various ways depending on the function (or application being executed) being performed by the cooking appliance 100. Meanwhile, various noise removal algorithms may be applied to the microphone 122 to remove noise generated in the process of receiving an external acoustic signal.

The user input unit 123 is for receiving information from the user. When information is input through the user input unit 123, the processor 180 controls the operation of the cooking appliance 100 to correspond to the input information.

The user input unit 123 is a mechanical input means (or a mechanical key, for example, a button located on the front/rear or side of the cooking appliance 100, a dome switch, a jog wheel, jog switches, etc.) and touch input means. As an example, the touch input means consists of a virtual key, soft key, or visual key displayed on the touch screen through software processing, or a part other than the touch screen. Alternatively, the touch input means consists of a touch key disposed in a part besides the touch screen.

The learning processor 130 can train a model composed of an artificial neural network using training data. Here, the learned artificial neural network may be referred to as a learning model. A learning model can be used to infer a result value for new input data other than learning data, and the inferred value can be used as the basis for a decision to perform an operation.

At this time, the learning processor 130 may perform AI processing together with the learning processor of the AI server.

At this time, the learning processor 130 may include a memory integrated or implemented in the cooking appliance 100. Alternatively, the learning processor 130 may be implemented using the memory 170, an external memory directly coupled to the cooking appliance 100, or a memory maintained in an external device.

The sensing unit 140 may use various sensors to obtain at least one of internal information of the cooking appliance 100, information about the surrounding environment of the cooking appliance 100, and user information.

At this time, the sensors included in the sensing unit 140 include a proximity sensor, an illuminance sensor, an acceleration sensor, a magnetic sensor, a gyro sensor, an inertial sensor, an RGB sensor, an Infrared (IR) sensor, a fingerprint recognition sensor, an ultrasonic sensor, an optical sensor, a microphone, a LiDAR, a radar, etc.

The output unit 150 may generate output related to vision, hearing, or tactile sensation.

At this time, the output unit 150 may include a display unit that outputs visual information, a speaker that outputs auditory information, and a haptic module that outputs tactile information.

The output unit 150 includes at least one of a display unit 151, a sound output unit 152, a haptic module 153, and an optical output unit 154.

The display unit 151 displays (outputs) information processed by the cooking appliance 100. For example, the display unit 151 may display execution screen information of an application running on the cooking appliance 100, or user interface (UI) and graphic user interface (GUI) information according to the execution screen information.

The display unit 151 can implement a touch screen by forming a mutual layer structure or being integrated with the touch sensor. This touch screen functions as a user input unit 123 that provides an input interface between the cooking appliance 100 and the user, and can simultaneously provide an output interface between the terminal 100 and the user.

The audio output unit 152 may output audio data received from the communication unit 110 or stored in the memory 170 in call signal reception, call mode or recording mode, voice recognition mode, broadcast reception mode, etc.

The sound output unit 152 may include at least one of a receiver, a speaker, and a buzzer.

The haptic module 153 generates various tactile effects that the user can feel. A representative example of a tactile effect generated by the haptic module 153 may be vibration.

The optical output unit 154 uses light from the light source of the cooking appliance 100 to output a signal to notify that an event has occurred. Examples of events that occur in the cooking appliance 100 may include receiving a message, receiving a call signal, a missed call, an alarm, a schedule notification, receiving an email, receiving information through an application, etc.

The memory 170 can store data supporting various functions of the cooking appliance 100. For example, the memory 170 may store input data, learning data, learning models, learning history, etc. obtained from the input unit 120.

The processor 180 may determine at least one executable operation of the cooking appliance 100 based on information determined or generated using a data analysis algorithm or a machine learning algorithm. Additionally, the processor 180 may control the components of the cooking appliance 100 to perform the determined operation.

To this end, the processor 180 may request, retrieve, receive, or utilize data from the learning processor 130 or the memory 170, and determine that one of the at least one executable operation is a predicted operation or is desirable. Components of the cooking appliance 100 can be controlled to execute operations.

At this time, if linkage with an external device is necessary to perform the determined operation, the processor 180 may generate a control signal to control the external device and transmit the generated control signal to the external device.

The processor 180 may obtain intent information for user input and determine the user's requirements based on the obtained intent information.

At this time, the processor 180 uses at least one of a Speech To Text (STT) engine for converting voice input into a string or a Natural Language Processing (NLP) engine for obtaining intent information of natural language. Thus, intention information corresponding to the user input can be obtained.

At this time, at least one of the STT engine or the NLP engine may be composed of at least a portion of an artificial neural network learned according to a machine learning algorithm. In addition, at least one of the STT engine or the NLP engine may be learned by the learning processor 130, by the learning processor of the AI server, or by distributed processing thereof.

The processor 180 collects history information including the user's feedback on a content of the operation or the operation of the cooking appliance 100 and stores it in the memory 170 or the learning processor 130, or transmits it to an external device such as an AI server. The collected historical information can be used to update the learning model.

The processor 180 may control at least some of the components of the cooking appliance 100 to run an application program stored in the memory 170. Furthermore, the processor 180 may operate two or more of the components included in the cooking appliance 100 in combination with each other in order to run the application program.

The heater 190 can generate heat using supplied energy.

The heater 190 can generate heat using supplied electricity and heat the interior of the cooking appliance 100 using the generated heat.

The heater 190 may be provided inside the cooking chamber 12. The heater 190 may be placed at the side or bottom of the cooking chamber 12.

The heater 190 may include a circuit that converts electrical energy into thermal energy.

Hereinafter, the cooking appliance 100 may be referred to as an artificial intelligence cooking appliance 100 or an artificial intelligence oven.

Additionally, when the cooking appliance 100 is provided as attached to a wall, it may be called a wall oven.

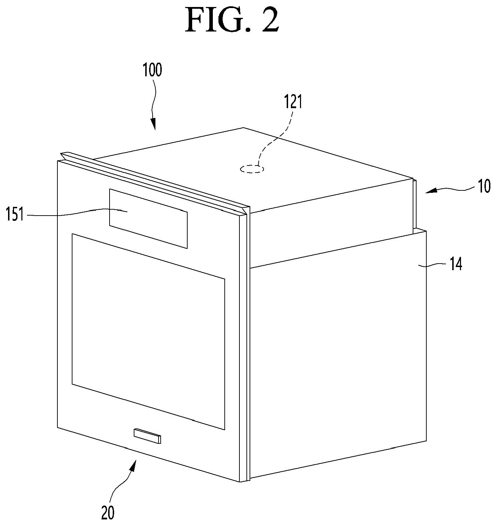

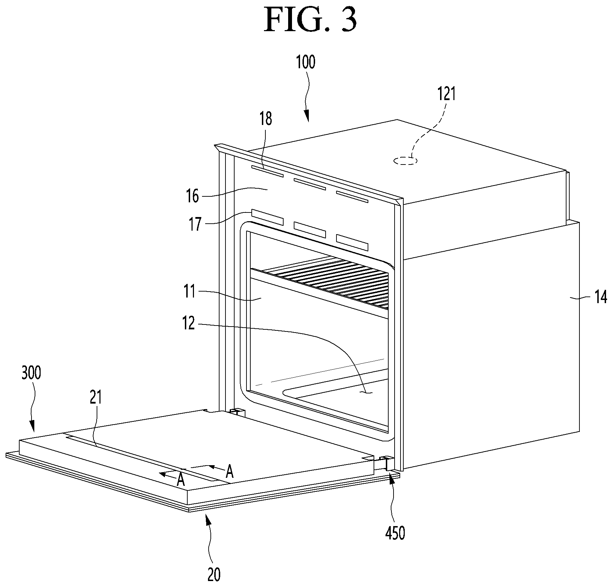

FIG. 2 is a perspective view of a cooking appliance according to an embodiment of the present disclosure, and FIG. 3 is a perspective view illustrating the door of the cooking appliance of FIG. 2 in an open state.

The cooking appliance 100 may include a main body 10 that accommodates various parts therein.

The main body 10 may include an inner frame 11 that forms the galley compartment 12, and an outer frame 14 that surrounds the inner frame 11 on the outside of the inner frame 11.

A camera 121 may be provided at the upper part of the inner frame 11. The camera 121 can capture the galley 12. The captured image can be used to recognize ingredients being cooked.

A body panel 16 may be provided at the front end of the inner frame 11.

The body panel 16 may be coupled to the front end of the inner frame 11 or may be formed integrally with the front end.

The door 20 may be rotatably connected to the main body 10 by a hinge mechanism 450.

As an example, a hinge mechanism 450 may be connected to the bottom of the door 20.

In order to minimize increase of the temperature due to the heat supplied to the cooking chamber 12, air outside the door 20 may flow into the door 20.

Therefore, the door 20 includes a door air outlet 21 through which air flowing inside the door 20 is discharged, and the main body 10 includes a door air outlet 21 through which air flowing through the door 20 is discharged. It may include a main body air inlet 17 through which air flows.

The body air inlet 17 may be formed in the body panel 16.

In addition, the air introduced into the main body 10 through the main body air inlet 17 may flow through the main body 10 and then be discharged to the outside of the main body 10 through the main body air outlet 18.

A body air outlet 18 may also be formed on the body panel 16.

The door 20 may further include a control device 300.

The control device 300 is not limited, but is located on the upper side of the door 20, and includes a portion of the main body panel 16 located on the upper side of the galley 12 when the door 20 is closed. They can be positioned to face each other.

The control device 300 may include one or more of a display unit 151 and a user input unit 123.

The display unit 151 may be implemented in the form of a touch screen capable of receiving touch input.

Through the control device 300, operating information of the cooking appliance 100 can be displayed and/or a user's operating command can be input.

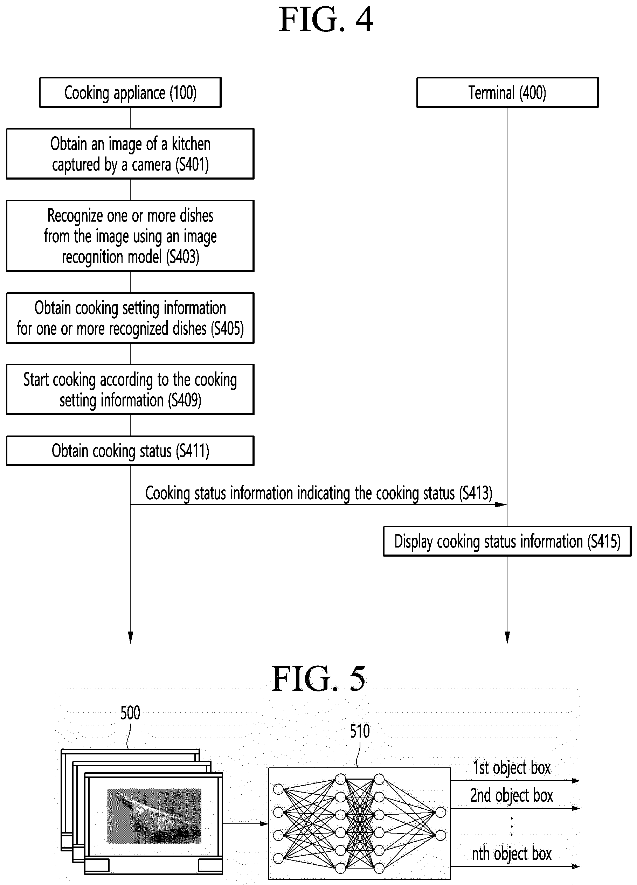

FIG. 4 is a ladder diagram explaining a method of operating a cooking system according to an embodiment of the present disclosure.

The cooking system may include a cooking appliance 100 and a terminal 400.

The terminal 400 may be a mobile terminal such as a user's smartphone, smart pad, or PC.

Referring to FIG. 4, the processor 180 of the cooking appliance 100 obtains an image of the cooking chamber 12 through the camera 121 (S401).

In one embodiment, when food is loaded into the cooking chamber 12, the processor 180 turns on the camera 121 to capture the interior of the cooking chamber 12.

In another embodiment, the processor 180 may turn on the operation of the camera 121 when receiving a cooking start command.

The processor 180 uses an image recognition model to recognize one or more food items from the obtained image (S403).

The image recognition model may be an artificial neural network-based model learned by a deep learning algorithm or a machine learning algorithm.

An image recognition model may be a model that infers what objects included in the image data are based on image data. An object can be a food product.

The image recognition model may be a model learned by an artificial intelligence server, received from the artificial intelligence server, and stored in the memory 170 of the cooking appliance 100.

The processor 180 may use the image recognition model stored in the memory 170 to identify one or more food items included in the image from image data corresponding to the image.

As another example, the processor 180 can transmit the captured image to the artificial intelligence server via the communication unit 110. The artificial intelligence server can extract object identification information from the image using an image recognition model, and transmit the extracted object identification information to the cooking appliance 100.

The image recognition model can include an object detection model and an object identification model.

The object detection model can be a model that detects one or more objects from image data, and the object identification model can be a model that identifies what the one or more detected objects are.

A process of detecting multiple objects from an image using an object detection model and identifying the detected objects using an object identification model is described.

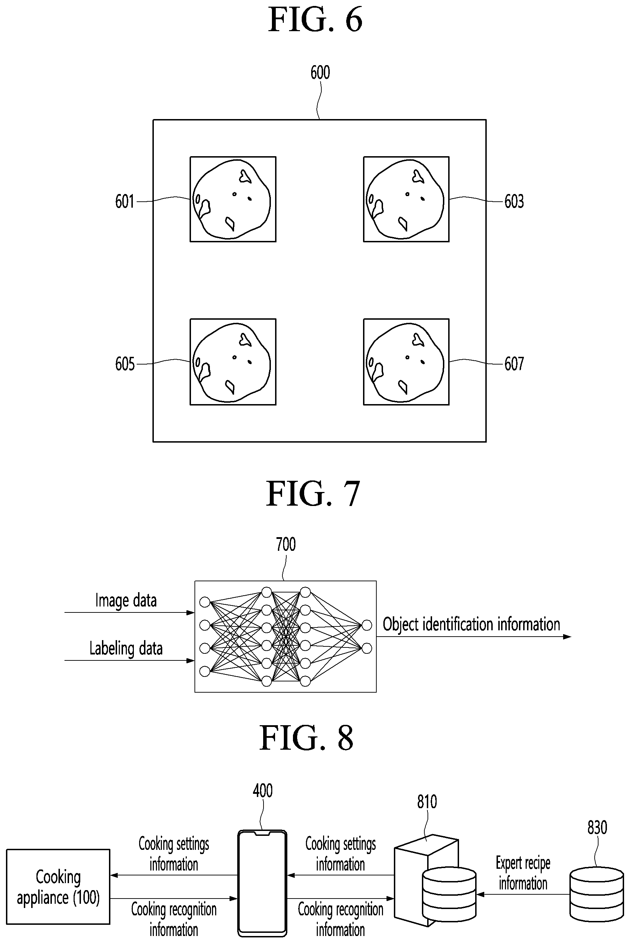

FIGS. 5 and 6 are diagrams explaining the learning process of an object detection model according to an embodiment of the present disclosure.

Referring to FIG. 5, the object detection model 510 can obtain a set of object boundary boxes including multiple objects from each learning image data by using a learning image data set 500 including multiple image data.

The set of object boundary boxes can be a set of boundary boxes including objects.

The object detection model 510 can detect multiple objects from image data by using Single Shot multibox Detector (SSD) MobilenetV2, Faster R-CNN Inception, and You Only Look Once (YOLO) algorithm.

The You Only Look Once (YOLO) algorithm can be composed of multiple CNNs.

The You Only Look Once (YOLO) algorithm may include a grid partitioning process, a prediction process, a confidence calculation process, and an object selection process.

The grid partitioning process may be a process of dividing image data into multiple grids. The sizes of each of the multiple grids may be the same.

The prediction process may be a process of predicting the number of bounding boxes designated with a predefined shape centered on the grid center for each grid.

The bounding boxes designated with a predefined shape may be generated from data by the K-means algorithm and may contain prior information about the size and shape of the object.

Each bounding box may be designed to detect objects of different sizes and shapes.

Each bounding box may represent the shape or boundary of the object.

The reliability calculation process may be a process of calculating the reliability of the bounding box based on whether each of the obtained bounding boxes in the prediction process contains an object or only contains the background.

The object judgment process may be a process of determining that an object exists in a bounding box having a reliability higher than a preset value according to the reliability calculation process.

Through the object judgment process, multiple bounding boxes 601 to 607 included in the image data 600 may be extracted.

The processor 180 may obtain identification information of each object from multiple bounding boxes extracted through the object detection model 510.

The processor 180 may identify an object existing in a bounding box from image data corresponding to each bounding box using the object identification model.

The object identification model may be a model based on an artificial neural network learned using a deep learning algorithm or a machine learning algorithm.

The object identification model may be a model learned through supervised learning.

The object identification model may be a model that infers object identification information from image data. The object identification information may be information that identifies the object, such as the name of the object or the identifier of the object.

The object identification model may be a model that outputs object identification information by using a training data set that includes image data for learning and labeling data labeled with the image data for learning as input data.

FIG. 7 illustrates a learning process of an object identification model according to an embodiment of the present disclosure.

Referring to FIG. 7, the object identification model 700 can infer object identification information by using a training data set including image data for learning and labeling data labeled therefor.

The labeling data is correct data and may be object identification information.

The object identification model 700 can be learned to minimize a cost function corresponding to the difference between the labeling data and the object identification information.

The cost function of the object identification model 700 can be expressed as the square mean of the difference between the label for the object identification information corresponding to each image data and the object identification information inferred from each image data.

When an input feature vector is extracted from the learning image data and input, the object identification result is output as a target feature vector, and the object identification model 700 may be trained to minimize a loss function corresponding to the difference between the output target feature vector and the labeled object identification information.

The object identification model 700 may be trained by the learning processor 130 of the cooking appliance 100 or the learning processor of the AI server and may be loaded onto the cooking appliance 100.

The object identification model 700 may determine the first object identification information from the first image data corresponding to the first bounding box 601 illustrated in FIG. 6. For example, the first object identification information may be bread.

The object identification model 700 can determine the second object identification information from the second image data corresponding to the second boundary box 603. For example, the second object identification information can also be bread.

In this way, the object identification model 700 can identify what kind of food the object is from the image data.

Again, FIG. 4 will be described.

The processor 180 obtains cooking setting information of one or more recognized cooking items (S405).

The cooking setting information can include one or more of the capacity, cooking time, cooking mode, and cooking temperature of the recognized cooking items.

The processor 180 can receive cooking setting information from the user's terminal 400.

The user's terminal 400 can transmit food recognition information to the server through the cooking appliance control application installed on the terminal 400 and receive cooking setting information from the server. The terminal 400 can transmit the cooking setting information to the cooking appliance 100, and the cooking appliance 100 can start cooking according to the cooking setting information.

This will be described with reference to FIG. 8.

FIG. 8 is a drawing explaining a process of obtaining cooking setting information according to an embodiment of the present invention.

The cooking appliance 100 can transmit food recognition information obtained through an image recognition model to the terminal 400. The food recognition information can include food identification information (food name). The food recognition information can further include the number of foods.

The cooking material recognition information may further include information indicating whether the recognized cooking material is a standardized cooking material such as HMR or meal kit or a non-standardized cooking material.

The terminal 400 may transmit the cooking material recognition information received from the cooking appliance 100 to the server 810. The server 810 may be the AI server 200 illustrated in FIG. 2 or may be a separate server.

The server 810 may obtain cooking setting information using the cooking material recognition information and the expert recipe information stored in the database 830.

The expert recipe information may include recipe information corresponding to a standardized cooking material or recipe information corresponding to a non-standardized cooking material.

The server 810 may extract expert recipe information corresponding to the cooking material from the database 830 and obtain cooking setting information including the extracted expert recipe information.

The expert recipe information may include information on cooking modes, cooking times, and cooking temperatures corresponding to each of the plurality of cooking states of the food.

The server 810 may transmit the obtained cooking setting information to the terminal 400.

Again, FIG. 4 will be described.

The processor 180 initiates cooking of one or more foods according to the obtained cooking setting information (S409).

The processor 180 can start cooking the food based on the recipe information included in the cooking setting information.

The processor 180 obtains cooking status information for one or more food items (S411) and transmits the obtained cooking status information to the terminal 400 through the communication unit 110 (S413).

The cooking status information can include the cooking doneness status of the food items, the cooking mode, the cooking time, and the cooking temperature.

The cooking doneness status can be one of the raw status, the undercooked or medium status, the cooked status (cooked or done), the well-done status, and the overcooked status.

The processor 180 can obtain an image of the food items in real time through the camera 121 and obtain the cooking doneness status through the analysis of the obtained image.

The processor 180 can infer the cooking state through a CNN-based cooking state identification model learned by a deep learning algorithm or a machine learning algorithm.

The cooking state identification model may be stored in the memory 170.

The cooking state identification model may be a model learned through supervised learning. The training data set used for learning the cooking state identification model may include image data for learning and labeling data indicating the cooking state.

The cooking state identification model may exist in the number corresponding to each of the plurality of cooking items. In other words, there may exist a cooking state identification model corresponding to one cooking item.

The processor 180 may extract a target feature vector from image data, and learn a cooking state identification model so that a loss function between labeling data corresponding to the target feature vector and inference data corresponding to the inferred cooking doneness state is minimized.

The processor 180 may input the obtained image data in real time into the learned cooking state identification model, and may obtain the cooking doneness state as an output of the cooking state identification model.

The processor 180 may transmit cooking state information including the obtained cooking doneness state through the communication unit 110. The communication unit 110 may include a Wi-Fi module, but is not limited thereto, and a short-range communication module of various short-range communication standards may be used.

In addition to the cooking state according to the output of the cooking state identification model, the cooking state information may further include information on the cooking mode, cooking temperature, and cooking time.

In one embodiment, the processor 180 may periodically transmit the cooking state information to the terminal 400.

In another embodiment, the processor 180 may transmit the cooking state information to the terminal 400 whenever the cooking state changes.

The terminal 400 displays the cooking state information received from the cooking appliance 100 through the display (S415).

The terminal 400 may be equipped with a display (not shown) and may display the cooking state information received from the cooking appliance 100 on the display.

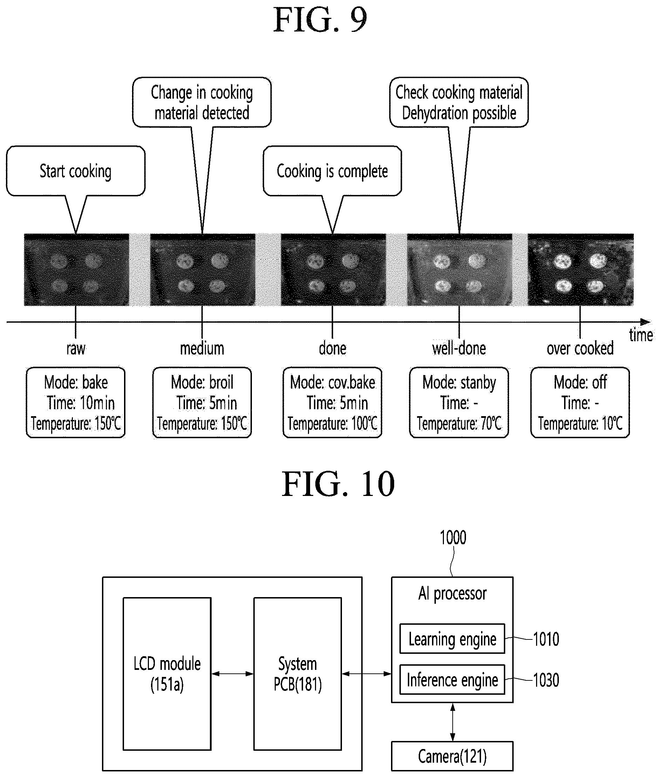

FIG. 9 is a diagram explaining an example of providing cooking state information according to a change in the cooking state according to one embodiment of the present invention.

Referring to FIG. 9, a cooking status alarm service displayed by a terminal 400 according to changes in the cooking state is illustrated.

The terminal 400 can display first cooking status information including raw state, bake mode, cooking time (10 minutes), and temperature (150 degrees) at the start of cooking.

In addition, the first cooking status information can further include the phrase <Start cooking>.

The terminal 400 can notify detection of a cooking change when the cooking state changes from raw to undercooked. That is, the terminal 400 can display second cooking state information including the undercooked state of the food, cooking mode (broil mode), cooking time (5 minutes), and temperature (150 degrees).

The second cooking state information can further include the text <Cooking change detected>.

The terminal 400 can notify detection of a cooking change when the cooking state changes from undercooked to cooked. That is, the terminal 400 can display third cooking state information including the cooking state of the food, cooking mode (cov.bake mode), cooking time (5 minutes), and temperature (100 degrees).

The third cooking state information can further include the text <Cooking is complete>.

The terminal 400 can notify detection of a cooking change when the cooking state changes from the cooked state to the standby state. That is, the terminal 400 can display fourth cooking state information including the well-cooked state of the food, cooking mode (standby mode), cooking time (-minutes), and temperature (70 degrees).

The fourth cooking state information can further include the text <Please check the food. It can be burned>.

The terminal 400 can notify detection of a cooking change when the cooking state changes from the well-cooked state to the over-cooked state. That is, the terminal 400 can display fifth cooking state information including the over-cooked state of the food, cooking mode (off mode), cooking time (-minutes), and temperature (10 degrees).

The fifth cooking state information can further include the text <Please remove the food>.

In this way, according to an embodiment of the present invention, information on the cooking status can be provided to the user in real time according to changes in the cooking status. Accordingly, the user does not need to directly check the cooking status in front of the cooking appliance 100, so that the convenience of cooking can be greatly improved.

Meanwhile, the cooking status information transmitted by the cooking appliance 100 to the terminal 400 can further include a cooking action guide. The cooking action guide can include information that guides the user's cooking action when an additional action from the user is required during automatic cooking.

The user's cooking action can include turning over the food, sprinkling seasoning, adding a recipe, etc. The user can take an action at an appropriate cooking timing through the cooking action guide. Accordingly, the user can receive guidance at an appropriate timing when an additional action is required, so that the convenience of cooking can be greatly improved.

FIG. 10 is a diagram explaining a configuration for image processing of a cooking appliance according to an embodiment of the present invention.

Referring to FIG. 10, a system PCB 181 included in a processor 180 and an LCD 151a included in a display unit 150 are illustrated.

The cooking appliance 100 may further include an AI processor 1000 separate from the processor 180. The AI processor 1000 may be the learning processor 130 of FIG. 1.

The AI processor 1000 may include a learning engine 1010 and an inference engine 1030.

The learning engine 1010 may be an engine that learns the image recognition model and the cooking status identification model.

The inference engine 1030 may infer object identification information through the learned image recognition model. In addition, the inference engine 1030 may infer the cooking doneness status through the learned cooking status identification model.

The inference engine 1030 receives image data corresponding to an image captured by the camera 121 from the camera 121, and can identify the food using an image recognition model from the received image data. In addition, the inference engine 1030 can infer the cooking state from the image data when cooking of the food has started.

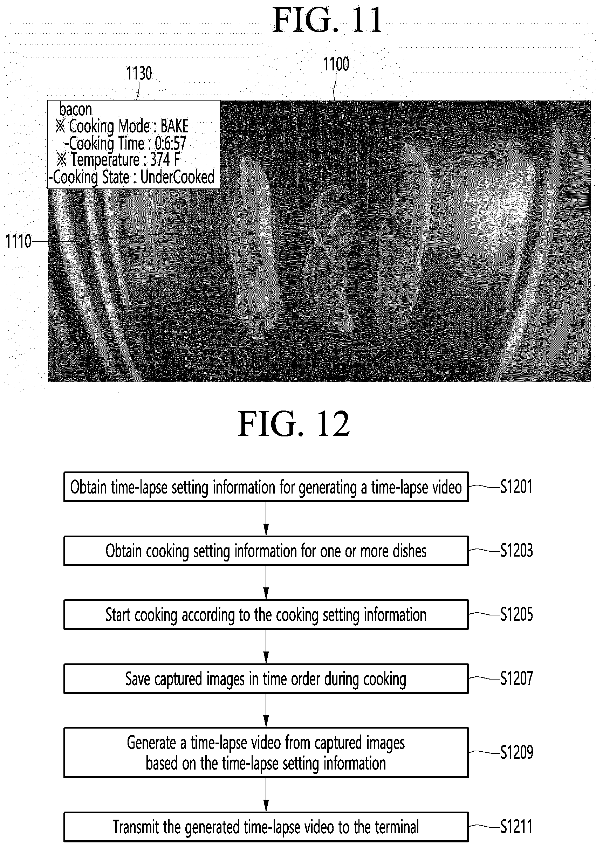

FIG. 11 is a drawing illustrating a UI of a cooking state notification service according to an embodiment of the present invention.

Referring to FIG. 11, cooking state information 1100 indicating a state in which the food is being cooked is illustrated.

The cooking state information 1100 can be displayed through the terminal 400.

The cooking state information 1100 can include a food image 1110 and food state information 1130.

The cooking status information 1130 may further include a guide line indicating an object corresponding to the cooking image 1110. The cooking status information 1130 may include a cooking mode, cooking time, cooking temperature, and cooking status of the cooking corresponding to the cooking image 1110.

The terminal 400 may periodically display the cooking status information 1100. The terminal 400 may display the cooking status information when at least one of the cooking cooking status, cooking mode, and cooking temperature is changed.

Accordingly, the cooking status information can be notified to the user in real time, and the food can be prevented from being overheated or overcooked as a result of malfunction according to the automatic cooking setting.

In another embodiment, the cooking status information 1100 can be implemented as a video. That is, it can be implemented as a video so that the change of the food image 1110 can be shown in time series. Accordingly, the food status information 1130 can also be changed according to the cooking status of the food.

The user can share the food image and the food status information through SNS. Other users can also create their own recipes using the shared information.

FIG. 12 is a flowchart for explaining an operation method of a cooking appliance according to another embodiment of the present invention.

In particular, FIG. 12 is a drawing explaining a method for providing a cooking process for a food as a time-lapse video.

Some steps of FIG. 12 may exist before and after the steps of FIG. 4. This will be described later.

Referring to FIG. 12, the processor 180 of the cooking appliance 100 obtains time-lapse setting information for generating a time-lapse video (S1201).

In one embodiment, the processor 180 may obtain time-lapse setting information through the user input unit 123 or the display unit 151.

In another embodiment, the processor 180 may receive time-lapse setting information from the terminal 400. The terminal 400 may have a cooking appliance control application installed for managing the cooking appliance 100.

The terminal 400 may display a User Interface (UI) for receiving time-lapse setting information according to the execution of the application. The terminal 400 can receive time-lapse setting information through user input and transmit the received time-lapse setting information to the cooking appliance 100.

The time-lapse setting information can include a playback section (time-lapse period) of the time-lapse video and the image quality of the time-lapse video.

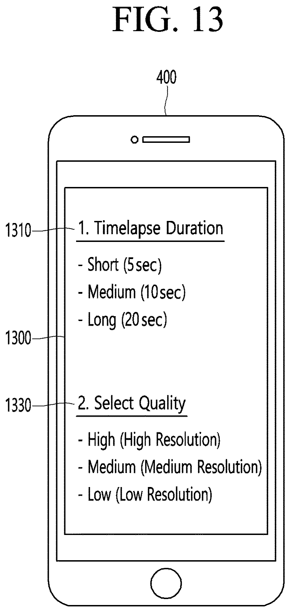

This will be described with reference to FIG. 13.

FIG. 13 is a drawing illustrating a time-lapse UI displayed by the terminal according to an embodiment of the present invention.

Referring to FIG. 13, the terminal 400 can display a time-lapse UI 700 according to the execution of the cooking appliance control application.

The time-lapse UI 700 can include a time-lapse period item 1310 for setting a playback section of the time-lapse video and an image quality item 1330 for selecting the image quality of the time-lapse video.

The time-lapse period item 1310 may include items corresponding to 5 seconds, 10 seconds, and 20 seconds, respectively. Here, 5/10/20 seconds are just examples.

In addition, the time-lapse period item 1310 may further include an input item (not shown) for the user to directly input the playback section of the time-lapse video.

The image quality item 1330 is an item for selecting the image quality of the time-lapse video, and may include a high-resolution item, a medium resolution item, and a low-resolution item.

The higher the image quality of the time-lapse video, the shorter the capture period may be, and the lower the image quality, the longer the capture period may be.

Step S1201 may be performed before step S401 of FIG. 4.

Again, FIG. 12 will be described.

The processor 180 obtains cooking setting information for setting a cooking method for one or more dishes (S1203).

The cooking setting information may include one or more of the capacity of the recognized dishes, cooking time, cooking mode, and cooking temperature.

In one embodiment, the processor 180 may receive the cooking setting information through the user input unit 123 or the display unit 151.

In another embodiment, the processor 180 may receive the cooking setting information from the terminal 400.

The embodiment of the cooking setting information may be applied to the embodiment of step S405 of FIG. 4.

The processor 180 starts cooking according to the cooking setting information (S1205).

Step S1205 may correspond to step S409.

The steps S1207 and subsequent steps may be steps performed after step S409 of FIG. 4.

The processor 180 stores captured images captured through the camera 121 in the memory 170 in the time order during cooking (S1207).

In one embodiment, the processor 180 may capture one or more cooking items through the camera 121 at a preset capture cycle, and may store captured images obtained by the capture in the buffer of the memory 170.

The processor 180 may set the capture cycle of the camera 121 differently according to the image quality selection information included in the time-lapse setting information.

When the image quality is set to a high resolution, the processor 180 may shorten the capture cycle, and when the image quality is set to a low resolution, the capture cycle may be lengthened.

The processor 180 generates a time-lapse video from captured images based on time-lapse setting information (S1209).

The processor 180 can edit captured images according to the set time-lapse period.

The processor 180 can edit the captured images to show the change in the cooking state of the food.

The processor 180 can extract a first captured image group corresponding to the raw state, a second captured image group corresponding to the under cooked state, and a third captured image group corresponding to the cooked state from the entire captured images.

The processor 180 can generate a time-lapse video from the first, second, and third captured image groups that matches the time-lapse period and the selected image quality.

The processor 180 transmits the generated time-lapse video to the terminal 400 (S1211).

The processor 180 can transmit the generated time-lapse video to the terminal 400 through the communication unit 110.

In another embodiment, the cooking appliance 100 transmits captured images and time-lapse setting information to the terminal 400, and the terminal 400 may generate a time-lapse video based on the captured images and time-lapse setting information.

The user can watch the time-lapse video through the terminal 400. The user can share the time-lapse video with other users by uploading the time-lapse video to an SNS application.

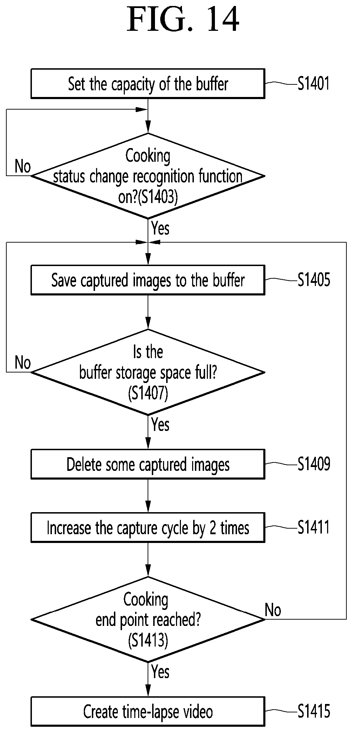

FIG. 14 is a flowchart explaining a process of generating a time-lapse video according to an embodiment of the present invention.

In particular, FIG. 14 is a drawing explaining step S1209 of FIG. 13 in detail.

FIG. 14 may be performed by a processor 180 of a cooking appliance 100, a controller of a terminal 400, or a server capable of communicating with a cooking appliance 100 and a mobile terminal 400.

Hereinafter, it is described assuming that the processor 180 of the cooking appliance 100 performs the steps of FIG. 14.

Referring to FIG. 14, the processor 180 sets the capacity (storage space) of the buffer of the memory 170 (S1401).

The buffer is a temporary storage provided in the memory 170 and may have a capacity corresponding to the capacity of the time-lapse video.

The capacity of the buffer may be included in the time-lapse setting information and may be received through a separate user input, or may be determined according to the time-lapse period and image quality.

After that, the processor 180 determines whether the recognition function for recognizing the change in the cooking state is turned on (S1403).

In one embodiment, the cooking state change recognition function may be a function for recognizing the change in the cooking state of the food.

The processor 180 may obtain an image of the food in real time through the camera 121 and may obtain the cooking state through analysis of the obtained image.

The processor 180 may infer the cooking state through a CNN-based cooking state identification model learned by a deep learning algorithm or a machine learning algorithm.

The function for inferring the cooking state through the cooking state identification model may be the cooking state change recognition function. The process of inferring the cooking state is replaced with the embodiment of FIG. 4.

If the cooking state change recognition function is turned on, the processor 180 stores the captured image in a buffer (S1405).

The processor 180 can store the images captured through the camera 121 in the buffer after the start of cooking.

The processor 180 determines whether the storage space of the buffer is full (S1407).

In one embodiment, the processor 180 can determine the storage space of the buffer as full if the total capacity of the captured images reaches the storage space of the buffer.

If the storage space of the buffer is full, the processor 180 deletes some images already stored in the buffer (S1409).

In one embodiment, if the storage space of the buffer is full, the processor 180 can delete the odd or even captured images. Accordingly, the storage space of the buffer can be secured by half of the total storage space.

After that, the processor 180 increases the capture cycle of the image by two times (S1411).

The processor 180 may increase the capture cycle by two times to secure free space in the storage space of the buffer. Here, the number of times two is only an example.

When the end point of cooking is reached, the processor 180 terminates the capture and generates a time-lapse video based on the captured images stored in the buffer (S1415).

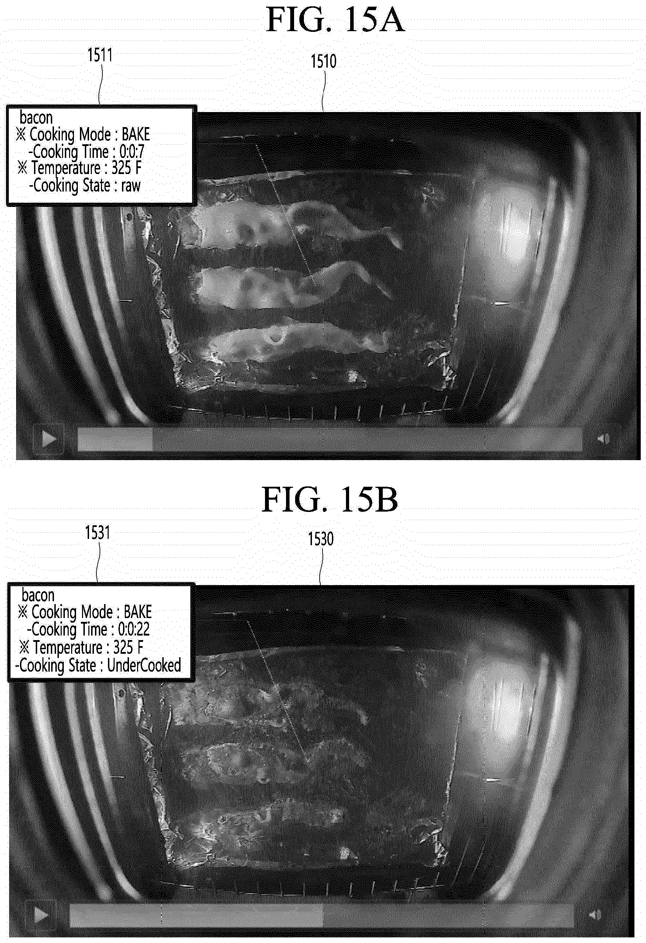

FIGS. 15a to 15c are drawings illustrating some images during the playback of a time-lapse video generated according to an embodiment of the present invention.

Referring to FIG. 15a, a first image 1510 constituting a time-lapse video is illustrated. The first image 1510 may include first cooking state information 1511.

The cooking state information 1511 may include the name of the cooking (bacon), cooking time (0:0:7), cooking temperature (325F), and cooking state (raw state).

Referring to FIG. 15b, a second image 1530 constituting a time-lapse video is illustrated. The second image 1530 may include second cooking state information 1531.

The cooking state information 1531 may include the name of the cooking (bacon), cooking time (0:0:22), cooking temperature (325F), and cooking state (undercooked state).

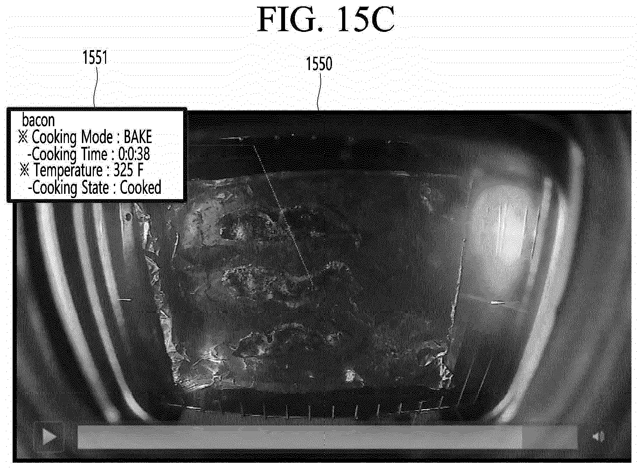

Referring to FIG. 15c, a third image 1550 constituting a time-lapse video is illustrated. The third image 1550 may include third cooking state information 1551.

The cooking state information 1551 may include the name of the cooking (bacon), cooking time (0:0:38), cooking temperature (325F), and cooking state (cooked state).

In this way, a user can watch a summarized cooking process without having to watch the entire cooking process of the cooking process through the time-lapse video.

A user can share the time-lapse video with other users through a Social Network Service (SNS) application. Other users can watch the time-lapse video and use it as a reference to create their own recipe.

According to one embodiment of the present disclosure, the above-described method can be implemented as a computer-readable code on a medium in which a program is recorded. Computer-readable media include any type of recording device that stores data that can be read by a computer system. Examples of computer-readable media include hard disk drives (HDDs), solid state disks (SSDs), silicon disk drives (SDDs), ROMs, RAMs, CD-ROMs, magnetic tapes, floppy disks, and optical data storage devices.

## Claims

1. A cooking appliance comprising:
a memory;
a wireless communication unit wirelessly communicating with a terminal;
a cooking chamber;
a heater configured to heat an inside of the cooking chamber;
a camera configured to capture the cooking chamber; and
a processor configured to recognize food from an image captured by the camera, obtain cooking setting information for cooking the recognized food, start cooking the food through the heater according to the obtained cooking setting information, obtain cooking status information for the food, and transmit the obtained cooking status information to the terminal through the wireless communication unit.

2. The cooking appliance according to claim 1, wherein the cooking status information includes a cooking status of the food, a cooking temperature, a cooking time, and a cooking mode.

3. The cooking appliance according to claim 2, wherein the processor is configured to obtain the cooking status of the food through an artificial neural network-based cooking status identification model learned through deep learning or machine learning from the image.

4. The cooking appliance according to claim 3, wherein the cooking status of the food is one of a raw state, an undercooked state, a cooked state, a well-cooked state, and an overcooked state.

5. The cooking appliance according to claim 4, wherein, whenever the cooking status of the food is changed, the processor is configured to transmit the cooking status information to the terminal.

6. The cooking appliance according to claim 1, wherein the processor is configured to obtain identification information for identifying the food through an artificial neural network-based image recognition model learned through deep learning or machine learning from the image.

7. The cooking appliance according to claim 6, wherein the processor is configured to transmit the identification information to a server, and receive the cooking setting information including recipe information of the food from the server.

8. The cooking appliance according to claim 1, wherein the processor is configured to obtain time-lapse setting information for generating a time-lapse video showing a cooking process, and generate the time-lapse video from images captured by the camera based on the time-lapse setting information.

9. The cooking appliance according to claim 8, wherein the time-lapse setting information includes a playback section of the time-lapse video and a picture quality of the time-lapse video.

10. The cooking appliance according to claim 8, wherein the processor is further configured to transmit the generated time-lapse video to the terminal through the wireless communication unit.

11. A method of operating a cooking appliance, comprising:
capturing a cooking chamber of the cooking appliance;
recognizing a food from an image captured by a camera;
obtaining cooking setting information for cooking the recognized food;
starting cooking the food according to the obtained cooking setting information;
obtaining cooking status information for the food; and
transmitting the obtained cooking status information to a terminal.

12. The cooking appliance operating method according to claim 11, wherein the cooking status information includes a cooking status of the food, a cooking temperature, a cooking time, and a cooking mode.

13. The cooking appliance operating method according to claim 12, further comprising:
obtaining the cooking status of the food through an artificial neural network-based cooking status identification model learned through deep learning or machine learning from the image.

14. The cooking appliance operating method according to claim 12, wherein the cooking status of the food is one of a raw state, an undercooked state, a cooked state, a well-cooked state, and an overcooked state.

15. The cooking appliance operating method according to claim 14, wherein the step of transmitting is to transmit the cooking status information to the terminal whenever the cooking status of the food is changed.

16. The cooking appliance operating method according to claim 11, wherein the step of recognizing includes a step of obtaining identification information for identifying the food through an artificial neural network-based image recognition model learned through deep learning or machine learning from the image.

17. The cooking appliance operating method according to claim 16, wherein the step of obtaining the cooking setting information includes a step of transmitting the identification information to a server, and receiving the cooking setting information including recipe information of the food from the server.

18. The cooking appliance operating method according to claim 11, further comprising:
obtaining time-lapse setting information for generating a time-lapse video showing a cooking process; and
generating the time-lapse video from images captured through the camera based on the time-lapse setting information.

19. The cooking appliance operating method according to claim 18, wherein the time-lapse setting information includes a playback section of the time-lapse video and a picture quality of the time-lapse video.

20. The cooking appliance operating method according to claim 18, further comprises transmitting the generated time-lapse video to the terminal through a communication unit.
